# EUROPÄISCHE PATENTANMELDUNG

(11) **EP 1 238 847 A2**
(43) Veröffentlichungstag der Anmeldung: **11.09.2002**
(21) Anmeldenummer: 02004062.2
(22) Anmeldetag: 23.02.2002
(51) Int. Cl.: B60K 17/346

(54) **Kraftfahrzeug-Antriebsstrang**

(30) Priorität: 09.03.2001 DE 10111257
(71) Anmelder: DaimlerChrysler AG, 70567 Stuttgart (DE)
(72) Erfinder: Röhringer, Arno, 71254 Ditzingen (DE); Schröder, Rolf, 70619 Stuttgart (DE); Wörner, Günter, 71394 Kernen (DE)

(57) **Zusammenfassung**

Kraftfahrzeug-Antriebsstrang enthaltend ein Differentialgetriebe (2), welches einen Eingangs-Differentialteil und zwei Ausgangs-Differentialteile aufweist. Zwischen zweien der Differentialteile ist eine Reibkupplung (32) mit beschränktem übertragbaren Drehmoment angeordnet, so dass diese bei definierten kleinen Drehmomentunterschieden zwischen den beiden gekuppelten Differentialteilen und bei Drehmomentstößen in Schlupfbetrieb gehen kann. Ein temperaturabhängiges Einstellmittel (38) reduziert den Kupplungsschließdruck in Abhängigkeit von der Kupplungstemperatur mit zunehmender Kupplungstemperatur.

## Beschreibung

Die Erfindung betrifft einen Kraftfahrzeug-Antriebsstrang gemäß dem Oberbegriff von Anspruch 1.

Demgemäß betrifft die Erfindung einen Kraftfahrzeug-Antriebsstrang, welcher ein Differentialgetriebe enthält, welches einen Eingangs-Differentialteil und zwei Ausgangs-Differentialteile aufweist.

Ein Kraftfahrzeug-Antriebsstrang dieser Art ist aus der DE 39 21 323 A1 bekannt. Ein Gangwechselgetriebe, welches von einem Kraftfahrzeugmotor antreibbar und selbsttätig oder von Hand schaltbar ist, treibt ein Planetenrädergetriebe an. Von dem Planetenrädergetriebe ist ein Hohlrad mit einer Ausgangswelle des Gangwechselgetriebes, ein Planetenträger mit einem zur Hinterachse des Kraftfahrzeuges führenden Antriebsstrang, und ein inneres Zentralrad über eine Vorderachskupplung mit einem zur Vorderachse des Kraftfahrzeuges führenden Antriebsstrang antriebsmäßig verbunden. Das Planetenrädergetriebe ist durch eine zwischen dem Planetenträger und dem inneren Zentralrad angeordnete Sperrkupplung der Lamellenbauart sperrbar, welche durch federnde Mittel eingerückt und durch ein Druckmittel-Stellglied ausgerückt wird. Die Vorderachskupplung wird durch ein Druckmittel-Stellglied eingerückt und durch Federmittel ausgerückt. Das Planetenrädergetriebe ist ein so genanntes "Längsdifferential", weil es die Antriebskraft des Kraftfahrzeugmotors in Fahrzeuglängsrichtung auf die Hinterradachse und die Vorderradachse verteilt. Es können folgende Betriebszustände geschaltet werden:
1. Hinterradantrieb, wobei die Sperrkupplung geschlossen und damit das Planetenrädergetriebe gesperrt ist und die Vorderachskupplung geöffnet ist.
2. "Ausgeglichener Vierradantrieb", wobei die Sperrkupplung geöffnet und die Vorderachskupplung geschlossen ist.
3. "Längsgesperrter Vierradantrieb", wobei die Sperrkupplung und die Vorderachskupplung geschlossen sind. Dies wird auch als längsgesperrter Allradantrieb bezeichnet.

Die Kupplungen sind jeweils vollständig geöffnet oder geschlossen. Ein Reibungsschlupfbetrieb ist als Dauerbetrieb nicht vorgesehen.

Ein ähnlicher Kraftfahrzeug-Antriebsstrang mit einem Verteilergetriebe zur Verteilung des Antriebsdrehmoments auf zwei verschiedene Fahrzeugachsen ist aus der DE 195 27 484 A1 bekannt.

Aus dem DE-Gbm G 93 20 400.0 ist ein Verteilergetriebe für Kraftfahrzeuge bekannt, bei welchem eine Abtriebswelle für eine Fahrzeughinterachse mit einer Abtriebswelle für eine Fahrzeugvorderachse durch eine formschlüssige Kupplung wahlweise verbindbar und durch eine Reibkupplung dauernd verbunden ist. Die Reibkupplung hat ein relativ kleines übertragbares Drehmoment. Bei geöffneter formschlüssiger Kupplung wirkt die Reibkupplung als Stoßdämpfer und zur Verringerung von Schaltschlägen und Drehmoment-Lastwechselschlägen. Ihr Reibungsmoment ist so klein, dass sie bei kleinen Drehmomentunterschieden und Drehmomentstößen in Reibschlupfbetrieb übergeht. Durch sie werden Spiele des Antriebsstranges aufgezehrt. Die Reibkupplung ist nicht Bestandteil eines Differentialgetriebes.

Aus der DE 42 30 989 A1 ist es bekannt, die Schaltzeiten eines Verteilergetriebes oder Zwischengetriebes in Abhängigkeit von der Temperatur des Getriebes zu korrigieren.

In einem Triebstrang kann es bei Laständerungen, insbesondere beim Wechsel von Schubbetrieb auf Zugbetrieb oder umgekehrt zu Schlaggeräuschen kommen. Solche Geräusche werden bei Allradfahrzeugen nur vermieden, wenn sie eine Längssperre haben und diese eingeschaltet ist, d. h. der Vorderradantriebsstrang und der Hinterradantriebsstrang mit dem Eingangsstrang des Verteilergetriebes durch eine Kupplung zur gemeinsamen Drehmomentübertragung gesperrt sind.

Durch die Erfindung soll die Aufgabe gelöst werden, bei Allradfahrzeugen ohne Längssperren den gleichen Komfort zu erzielen durch Vermeidung von Schlägen oder Stößen im Antriebsstrang wie bei Fahrzeugen mit Längssperren.

Diese Aufgabe wird gemäß der Erfindung durch die Merkmale von Anspruch 1 gelöst.

Demgemäß wird die Erfindung dadurch gelöst, dass zwei von den drei Differentialteilen durch eine Drehmomentdämpfungs-Reibkupplung miteinander gekuppelt sind, deren schlupffrei übertragbares Kupplungsdrehmoment so klein ist, dass sie bei Drehmomentstößen und bei Drehmomentdifferenzen, wie sie bei üblichem Kraftfahrzeugbetrieb normalerweise zwischen den beiden Differentialteilen auftreten, automatisch in Reibungs-Schlupfbetrieb geht, und dass die Reibkupplung mit einem temperaturabhängigen Einstellmittel versehen ist, welches mindestens in einem vorbestimmten Temperaturbereich den Kupplungsschließdruck und damit das übertragbare Kupplungsdrehmoment abhängig von der Kupplungstemperatur mit steigender Kupplungstemperatur verkleinert und mit abnehmender Kupplungstemperatur erhöht.

Die Erfindung berücksichtigt wesentliche technische Grundanforderungen an eine Drehmomentschlag-Dämpfungseinrichtung. Das aktive Dämpfungsmoment muss mit dem maximalen Dämpfungswert beim Lastübergang wirken, d. h. beim Drehmomentübergang im Antriebsstrang von Zug nach Schub oder von Schub nach Zug. Bei besonderen Betriebszuständen, wie beispielsweise bei Kurvenfahrt, bei unterschiedlichen Rollradien der Fahrzeugräder oder bei Schlupf an einer Fahrzeugachse, entstehen im Differentialgetriebe Differenzwege, welche eine dort installierte Kupplung aktivieren können. Dies kann erhebliche funktionelle Nachteile haben, wie z. B. Rupfen durch Reibschwingungserregung im Antriebsstrang und Verschleiß im Antriebsstrang und in der Kupplung, wenn die Kupplung gemäß dem Stand der Technik für eine konstante Ausführung des maximalen Kupplungsmomentes ausgelegt ist. Außerdem ist der Betriebszustand des Abschleppens des Kraftfahrzeuges zu beachten, weil hierbei durch den Stillstand einer Fahrzeugachse erhebliche Belastungen in der Kupplung auftreten, wenn diese konstant mit ihrem vollen Schließdruck beaufschlagt wird, so dass diese defekt werden und ausfallen kann. Durch die Erfindung werden folgende Grundanforderungen an eine Drehmomentschlag-Dämpfungseinrichtung erfüllt:
a) die Dämpfungsvorrichtung muss mechanisch einfach funktionieren und minimalen Platzbedarf beanspruchen.
b) Die Dämpfungsvorrichtung muss an einer Stelle funktionell wirken, wo die größten Spiele bei Lastwechseländerungen im Antriebsstrang auftreten.
c) Lastwechseländerungen bedeuten eine Kurzzeitbeanspruchung, weshalb die Dämpfungsvorrichtung der Erfindung speziell für die Kurzzeitbeanspruchung ausgebildet ist. Durch die Erfindung wird bei kontinuierlichen Drehzahlunterschieden in den beiden Teilbetriebssträngen, z.B. "Vorderachse und Hinterachse" oder "linke und rechte Achswelle" die Dämpfungsfunktion in der Reibkupplung abgebaut.
d) Als zentraler Einbauraum für die Dämpfungsvorrichtung bzw. die als Dämpfungsvorrichtung dienende Reibkupplung ist sowohl von den Funktionsvorgaben als auch von den Einbauvorgaben im Antriebsstrang das Differentialgetriebe prädestiniert und gemäß bevorzugter Ausführungsform der Erfindung der Ort, wo die Dämpfungs-Reibkupplung angeordnet ist.

Gemäß der Erfindung ist als wesentliches Bauteil der Reibkupplung ein temperaturfühlendes Element vorgesehen, durch welches die Anpresskraft der Reibkupplung und damit auch das Kupplungsmoment automatisch steuerbar ist. Dieses temperaturabhängige Element verhindert die genannten Nachteile bei Langzeitbeanspruchung und bei größerer Kupplungsbeanspruchung (großen Kupplungs-Reibmomenten).

Als temperaturabhängiges Element kann eine Bimetallanordnung oder eine Memory-Element-Anordnung (Formerinnerungs-Element) oder ein anderes temperaturabhängiges Reaktionselement verwendet werden, welches seine Form und/oder seine Größe temperaturabhängig verändert. Diese Veränderung benutzt die Erfindung zur automatischen Steuerung des Schließdruckes der Reibkupplung und gegebenenfalls auch zum vollständigen Öffnen der Reibkupplung.

Gemäß einer bevorzugten Ausführungsform der Erfindung sind Maßnahmen vorgesehen, durch welche auch bei sehr tiefen Temperaturen verhindert wird, dass der Schließdurck der Reibkupplung so groß wird, dass der Fahrantriebsstrang zu einem "längsgesperrten Antriebsstrang" wird. Dies kann dadurch erreicht werden, dass das temperaturabhängig formveränderliche Element so ausgebildet und angeordnet wird, dass es nur oberhalb einer vorbestimmten Temperatur eine temperaturabhängige Veränderung des Kupplungsschließdruckes bewirkt, jedoch unterhalb dieser Temperatur den Kupplungsschließdruck nicht weiter verstärken kann.

Patentanspruch 21 zeigt eine hinsichtlich eines geringen Raumbedarfes besonders vorteilhafte Ausgestaltung eines Antriebsstranges mit Allradantrieb.

Die Erfindung wird im Folgenden mit Bezug auf die Zeichnungen anhand von bevorzugten Ausführungsformen als Beispiele beschrieben. In den Zeichnungen zeigen
Fig. 1 einen Kraftfahrzeug-Antriebsstrang nach der Erfindung,
Fig. 2 eine weitere Ausführungsform eines Kraftfahrzeug-Antriebsstranges nach der Erfindung,
Fig. 3 eine nochmals weitere Ausführungsform eines Kraftfahrzeug-Antriebsstranges nach der Erfindung,
Fig. 4 eine vergrößerte Darstellung eines Details des Differentialgetriebes von Fig. 1 mit einer besonderen Ausführungsform einer darin integrierten Reibkupplung nach der Erfindung zur Dämpfung von Drehmomentstößen durch leichte Gleitreibung in der Reibkupplung,
Fig. 5 das Differentialgetriebe von Fig. 1 mit einer weiteren Ausführungsform einer darin integrierten Reibkupplung nach der Erfindung,
Fig. 6 das Differentialgetriebe von Fig. 1 mit einer nochmals weiteren Ausführungsform einer darin integrierten Reibkupplung nach der Erfindung,
Fig. 7 eine vergrößerte Darstellung eines Details des Differentialgetriebes von Fig. 2 mit einer besonderen Ausführungsform einer darin integrierten Reibkupplung zur Dämpfung von Drehmomentstößen durch leichte Gleitreibung in dieser Reibkupplung,
Fig. 8 das Differentialgetriebe von Fig. 2 mit einer weiteren Ausführungsform der Reibkupplung nach der Erfindung,
Fig. 9 das Differentialgetriebe von Fig. 2 mit einer nochmals weiteren Ausführungsform der Reibkupplung nach der Erfindung,
Fig. 10 das Differentialgetriebe von Fig. 2 mit einer nochmals weiteren Ausführungsform der Reibkupplung nach der Erfindung,

Fig. 11 ein Temperatur-Drehmoment-Diagramm, in welchem in Abhängigkeit von der Temperatur der Reibkupplung der Erfindung das von ihr übertragbare Drehmoment (oder der Kupplungsschließdruck) gezeigt ist, wobei die Reibkupplung bei allen im Betrieb auftretenden Temperaturen mit steigender Temperatur ein abfallendes Drehmoment bzw. mit abfallender Temperatur ein höheres Drehmoment aufweist, wobei auf der horizontalen Diagrammachse die Kupplungstemperatur und auf der vertikalen Diagrammachse das Kupplungsdrehmoment (oder Kupplungsschließdruck) aufgetragen ist,

Fig. 12 ein Temperatur-Drehmoment-Diagramm für die Reibkupplung in einer Ausführungsform, bei welcher das übertragbare Drehmoment der Reibkupplung in einem definierten unteren Temperaturbereich konstant bleibt und nur in einem definierten oberen Temperaturbereich mit steigender Temperatur abfällt bzw. mit abfallender Temperatur ansteigt, wobei auf der horizontalen Diagrammachse die Kupplungstemperatur und auf der vertikalen Diagrammachse das Kupplungsdrehmoment (oder Kupplungsschließdruck) aufgetragen ist,

Fig. 13 das Differentialgetriebe von Fig. 2 mit einer bevorzugten Ausführungsform der Reibkupplung, durch welche diese entsprechend Fig. 12 im unteren Temperaturbereich ein temperaturunabhängiges, konstantes, übertragbares Drehmoment hat und in dem darin anschließenden oberen Temperaturbereich ein mit zunehmender Temperatur abfallendes bzw. mit steigender Temperatur zunehmendes übertragbares Drehmoment hat, indem die temperaturabhängige Einstellvorrichtung der Reibkupplung mit einem Leerlaufweg versehen ist,

Fig. 14 einen Axialschnitt durch ein temperaturabhängig formveränderliches Einstellelement, z. B. eine Bimetall-Ringscheibe, der temperaturabhängigen Einstellvorrichtung zur automatischen Einstellung des Schließdruckes und damit des übertragbaren Drehmoments der Reibkupplung nach einer beliebigen der vorstehend genannten Ausführungen, beispielsweise der Ausführung von Fig. 13, in einer flachen Form rechtwinkelig zur Scheibenmittelachse bei einer relativ niedrigen Betriebstemperatur von beispielsweise 100°C,

Fig. 15 einen Axialschnitt des ringscheibenförmigen Einstellelements von Fig. 14, tellerförmig verformt durch eine sehr tiefe Temperatur von beispielsweise -40°C,

Fig. 16 einen Axialschnitt des ringscheibenförmigen Einstellelements von Fig. 14 relativ zu Fig. 15 entgegengesetzt tellerförmig gewölbt durch eine verhältnismäßig hohe Betriebstemperatur von beispielsweise +150°C,

Fig. 17 eine Stirnansicht des ringscheibenförmigen Einstellelements von Fig. 14, wobei ein solches ringscheibenförmiges Einstellelement nachfolgend mit Bezug auf Fig. 13 beschrieben wird, jedoch auch für alle anderen Ausführungsformen der Erfindung verwendbar ist,

Fig. 18 zeigt in einem Teilbereich einen längs eingebauten Antriebsstrang für ein allradgetriebenes Kraftfahrzeug, der u.a. ein Differentialgetriebe umfasst,

Fig. 19 in einem Halbschnitt das Differentialgetriebe aus Fig. 18, bei welchem lediglich das Sonnenrad mit dem Planetenträger mittels einer Reibkupplung mit temperaturabhängigen Einstellelement gekuppelt ist,

Fig. 20 in einem Halbschnitt ein weiteres Differentialgetriebe, welches Anwendung in einem Antriebsstrang gemäß Fig. 18 finden kann und hinsichtlich des axialen Bauraumbedarfes noch weiter gehend optimiert ist.

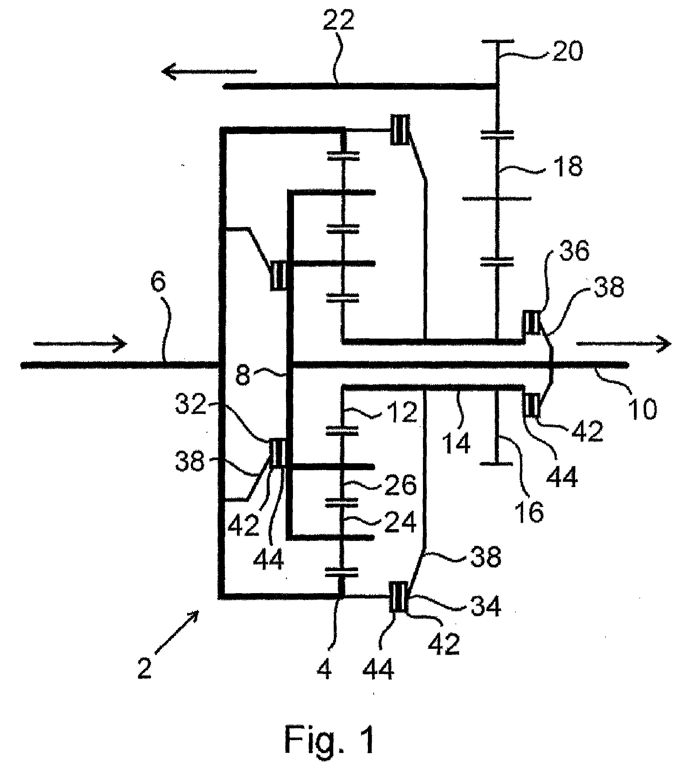

Der in Fig. 1 gezeigte Kraftfahrzeug-Antriebsstrang enthält ein Differentialgetriebe 2 in Form eines Planetengetriebes. Ein Hohlrad 4 ist durch eine Antriebswelle oder Eingangswelle 6, z. B. über eine nicht gezeigte Kupplung, mit einem nicht gezeigten automatischen oder manuellen, stufenlosen oder stufenweise schaltbaren Getriebe verbunden, welches von einem ebenfalls nicht gezeigten Fahrzeugmotor antreibbar ist. Das Hohlrad 4 ist somit ein Eingangs-Differentialteil. Ein Ausgangs-Differentialteil enthält einen Planetenträger 8, welcher über eine zentrale Abtriebswelle oder Ausgangswelle 10 mit dem Wellenstrang einer Antriebsachse, z. B. einer Hinterachse, eines Kraftfahrzeuges verbunden oder verbindbar ist, die nicht gezeigt ist. Ein weiteres Ausgangs-Differentialteil enthält ein zentrales, außenverzahntes Sonnenrad 12, welches mit einer zweiten Abtriebswelle oder zweiten Ausgangswelle 14 drehfest verbunden oder an dieser Welle gebildet ist. Diese zweite Ausgangswelle 14 ist an ihrem vom Sonnenrad 12 entfernten Ende mit einem weiteren Zahnrad 16 versehen und drehfest verbunden, welches über ein Zwischenzahnrad 18 ein Zahnrad 20 einer Übertragungswelle 22 antreibt, die über ein nicht gezeigtes Ausgleichsgetriebe mit Wellen einer weiteren Fahrzeugachse, vorzugsweise einer Vorderachse antriebsmäßig verbunden oder verbindbar ist, welche nicht gezeigt ist.

Der Planetenträger 8 trägt Paare von äußeren Planetenrädern 24 und inneren Planetenrädern 26. Die äußeren Planetenräder 24 sind je mit dem Hohlrad 4 und einem der inneren Planetenräder 26 in Eingriff. Die inneren Planetenräder 26 sind außerdem mit dem Sonnenrad 12 in Eingriff.

Gemäß der Erfindung sind bei allen Ausführungsformen mindestens:
a) der Eingangs-Differentialteil mit dem einen Ausgangs-Differentialteil gekuppelt, oder
b) der Eingangs-Differentialteil mit dem anderen Ausgangs-Differentialteil gekuppelt, oder
c) die beiden Ausgangs-Differentialteile miteinander durch eine Reibvorrichtung, im Folgenden Reibkupplung genannt, miteinander gekuppelt, welche einen so niedrigen Schließdruck hat, dass sie bereits bei niedrigen Drehmomentunterschieden zwischen den beiden Kupplungsteilen, wie sie bei normalen Fahrbedingungen häufig auftreten, und bei Drehmomentstößen, wie sie ebenfalls bei normalen Fahrbedingungen auftreten, in Schlupfbetrieb geht, bei welchem ihre beiden Kupplungsteile relativ zueinander rotieren und durch die Reibung zwischen ihren Kupplungsflächen ein Dämpfungsmoment erzeugen.

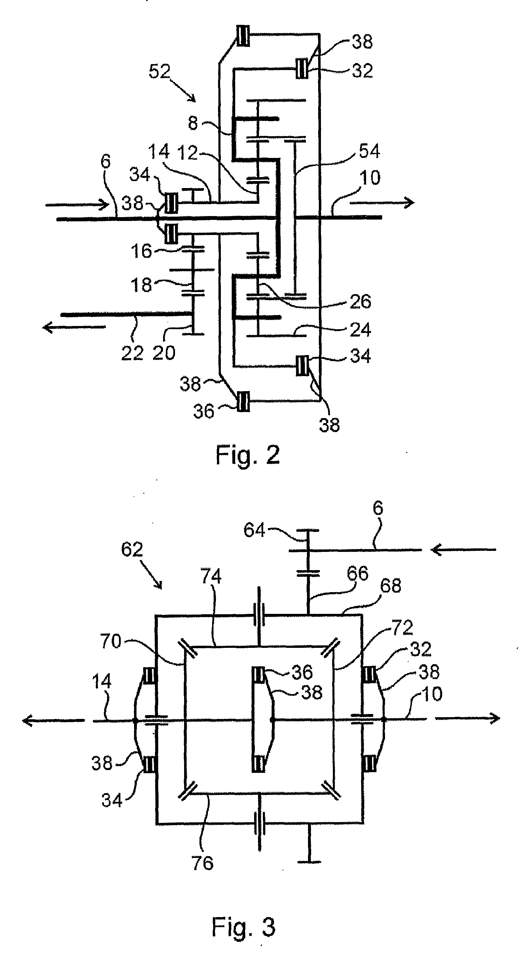

In den Fig. 1 bis 3 sind je durch drei solche Reibkupplungen 32, 34, 36 alle drei Möglichkeiten dargestellt, obwohl für die Praxis die Verwendung von nur einer dieser Möglichkeiten durch eine Reibkupplung ausreicht. Jede dieser Reibkupplungen 32, 34, 36 ist mit einem temperaturabhängigen Einstellelement 38 versehen, welches mindestens in einem vorbestimmten Temperaturbereich das übertragbare Kupplungsdrehmoment abhängig von der Kupplungstemperatur mit steigender Kupplungstemperatur verkleinert und mit abnehmender Kupplungstemperatur erhöht. Bei längerem Schleifbetrieb steigt die Kupplungstemperatur normalerweise an, beispielsweise beim Abschleppen eines Kraftfahrzeuges oder bei langen Serpentinenfahrten in den Kurven. Durch Reduzierung des übertragbaren Drehmoments durch Reduzierung des Kupplungsschließdruckes mit zunehmender Kupplungstemperatur wird erreicht, dass die Kupplung nicht überhitzt und durch Überhitzung zerstört wird. Das Differentialgetriebe 2 von Fig. 1 (und von den Fig. 2 und 3) ist ein so genanntes "Längsdifferential", da es eine Leistungsverteilung zwischen dem Hinterradantrieb durch die eine Ausgangswelle 10 und dem Vorderradantrieb durch die Übertragungswelle 22 bewirkt. Beim Abschleppen werden häufig nur die Vorderräder (oder die Hinterräder) auf das Abschleppfahrzeug gehoben, während die Räder der anderen Fahrzeugachse des abgeschleppten Fahrzeuges rotieren. Dadurch entstehen in dem als Längsdifferential dienenden Differentialgetriebe 2 hohe Differenzdrehzahlen. Hohe Differenzdrehzahlen entstehen auch bei Kurvenfahrten, weil die kurvenäußeren Fahrzeugräder schneller drehen als die fahrzeuginneren Räder. Solche Drehzahldifferenzen entstehen auch in Ausgleichsgetrieben der Fahrzeugachsen. Das Ausgleichsgetriebe kann z. B. gemäß Fig. 3 ausgebildet sein.

Fig. 1 zeigt eine solche Reibkupplung 32 zwischen dem Hohlrad 4 (Eingangs-Differentialteil) und dem Planetenträger 8 (der eine Ausgangs-Differentialteil). Statt dessen oder zusätzlich kann eine in gleicher Weise wirkende Reibkupplung 34 zwischen dem Hohlrad 4 (Eingangs-Differentialteil) und dem Sonnenrad 12 (anderer Ausgangs-Differentialteil) und/oder eine in gleicher Weise wirkende Reibkupplung 36 zwischen dem Planetenträger 8 (der eine Ausgangs-Differentialteil) und dem Sonnenrad 12 (der andere Ausgangs-Differentialteil) angeordnet sein.

Jede dieser Reibkupplungen 32, 34 und 36 enthält mindestens ein temperaturabhängiges Einstellelement 38, welches mindestens in einem vorbestimmten Temperaturbereich den Kupplungsschließdruck und damit das übertragbare Kupplungsdrehmoment abhängig von der Kupplungstemperatur mit steigender Kupplungstemperatur verkleinert und mit abnehmender Kupplungstemperatur erhöht. Das temperaturabhängig größenveränderliche und/oder formveränderliche Einstellelement kann vorzugsweise ein Bimetallelement oder ein Memory-Element sein. Ferner kann es als ein Funktionsteil der Reibkupplung 32, 34 und 36 ausgebildet sein, z. B. als Kupplungslamelle oder als Kupplungsreibscheibe mit oder ohne Reibbelag. Memory-Elemente sind auch unter der Bezeichnung Formerinnerungselement bekannt, da sie nach Wegfall der verformenden Temperatur ihre alte Form wieder einnehmen.

Dieses temperaturabhängige Einstellelement 38 kann gemäß den Figuren 1, 2 und 3 mit einem der beiden zu kuppelnden Getriebeteile drehfest verbunden sein und an einem davon entfernten Ende eine Kupplungsreibfläche aufweisen, z. B. einen Kupplungs-Reibbelag 42, der an einer Kupplungsreibfläche, z. B. einer Kupplungs-Reibscheibe 44 schleift, welche an dem betreffenden anderen zu kuppelnden Getriebeteil befestigt ist. Selbstverständlich können anstelle von einlamelligen Kupplungen auch mehrlamellige Kupplungen gebildet werden.

Die vorangehende Beschreibung gilt auch für alle anderen Ausführungsformen. Deshalb werden die anderen Ausführungsformen nachfolgend nur noch soweit beschrieben, wie sie Unterschiede haben.

Der in Fig. 2 gezeigte Kraftfahrzeug-Antriebsstrang nach der Erfindung enthält ein Differentialgetriebe 52 in Form eines Planetengetriebes ohne Hohlrad. Eine Eingangswelle 6 ist mit einem Planetenträger 8 drehfest verbunden, welcher ein Eingangs-Differentialteil bildet und äußere Planetenräder 24 und innere Planetenräder 26 trägt, die miteinander in Zahneingriff sind.

Die radial äußeren Planetenräder 24 sind mit einem ersten zentralen Sonnenrad 54 in Eingriff, welches mit einer ersten Abtriebswelle oder Ausgangswelle 10 drehfest verbunden ist zum Antrieb der Fahrzeugräder einer Fahrzeugachse, z. B. einer Hinterradachse. Dieses zentrale Sonnenrad 54 bildet einen ersten von zwei Ausgangs-Differentialteilen des Differentialgetriebes 52. Ein zweites Sonnenrad 12 ist mit den radial inneren Planetenrädern 26 in Zahneingriff und bildet einen zweiten Ausgangs-Differentialteil zum Antrieb der Fahrzeugräder einer anderen Fahrzeugachse, beispielsweise einer Fahrzeugvorderachse, über eine zweite Abtriebswelle oder Ausgangswelle 14 mit einem Zahnrad 16, welches über einen Zwischenzahnrad 18 mit dem Zahnrad 20 einer Übertragungswelle 22 in Zahneingriff ist. Zwischen dem Eingangs-Differentialteil, welcher durch die Eingangswelle 6 und den Planetenträger 8 gebildet ist, und dem einen Ausgangs-Differentialteil, welcher durch die eine Abtriebswelle 10 und das eine Sonnenrad 54 gebildet ist, ist eine Reibkupplung 32 mit einem temperaturabhängigen Einstellelement 38 von der genannten Art angeordnet. Statt dessen oder gleichzeitig kann eine andere Reibkupplung 34 dieser Art mit einem temperaturabhängigen Einstellelement 38 vorgesehen werden, um den Eingangs-Differentialteil 6, 8 mit dem anderen Ausgangs-Differentialteil 12, 14 temperaturabhängig zu koppeln für Kupplungs-Rutschbetrieb. Ebenfalls gleichzeitig oder statt dessen kann eine Reibkupplung 36 dieser Art mit einem temperaturabhängigen Einstellelement 38 der genannten Art vorgesehen sein, um die beiden Ausgangs-Differentialteile 12, 14 einerseits und 54, 10 andererseits miteinander temperaturabhängig zu kuppeln.

Fig. 3 zeigt einen Kraftfahrzeug-Antriebsstrang mit einem Differentialgetriebe 62, welches als Längsdifferential oder als Achsdifferential (Ausgleichsgetriebe) in einer Fahrzeugachse verwendbar ist. Eine Antriebswelle 6 mit einem Zahnrad 64 treibt ein Zahnrad 66, welches drehfest mit einem Ausgleichsgehäuse 68 verbunden ist. Im Gehäuse 68 sind koaxial zur Drehachse von dessen Zahnrad 66 zwei schräg verzahnte Zahnräder 70 und 72 drehbar gelagert, welche je mit einer von zwei Abtriebswellen oder Ausgangswellen 10 bzw. 14 drehfest verbunden sind. Die beiden schräg verzahnten Zahnräder 70, 72 sind mit zwei weiteren schräg verzahnten Zahnrädern 74 und 76 in Eingriff, welche rechtwinkelig dazu im Ausgleichsgehäuse 68 drehbar gelagert sind. Gemäß der Erfindung ist mindestens eine der Reibkupplungen 32 oder 34 oder 36 mit zugehörigem temperaturabhängigem Einstellelement 38 der genannten Art zwischen dem Eingangs-Differentialteil 66, 68, welches durch das Ausgleichsgehäuse 68 und dessen Zahnrad 66 gebildet ist, und einem Ausgangs-Differentialteil 10, 72 angeordnet, welches durch die eine Ausgangswelle 10 und deren schräg verzahntes Zahnrad 72 gebildet ist; oder zwischen dem Eingangs-Differentialteil 66, 68 und dem anderen Ausgangs-Differentialteil 14, 70 angeordnet, welcher durch die andere Ausgangswelle 14 und dessen schräg verzahntem Zahnrad 70 gebildet ist; oder zwischen den beiden Ausgangs-Differentialteilen 10, 72 einerseits und 14, 70 andererseits angeordnet.

Die Reibkupplung 32 oder 34 oder 36 hat jeweils nur ein kleines übertragbares Drehmoment, welches von der Kupplungstemperatur abhängig variabel ist, um bei Drehmomentstößen und bereits bei kleinen Drehmomentunterschieden zwischen den gekuppelten Teilen in Reibungs-Schlupfbetrieb zu gehen und dadurch Drehmomentstöße zu dämpfen und ein Sperren des Differentialgetriebes zu vermeiden.

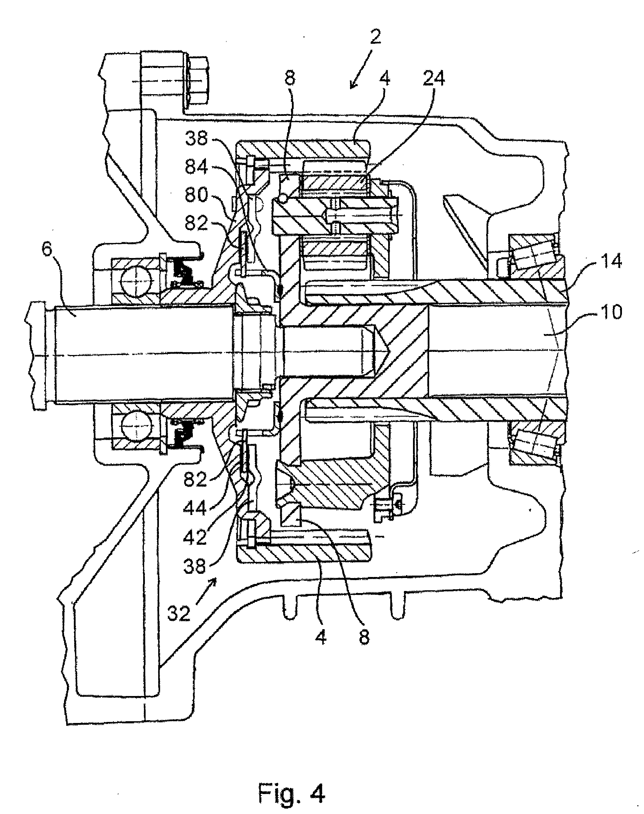

Wie das in Fig. 4 gezeigte Detail von Fig. 1 zeigt, kann das temperaturabhängig formveränderliche Einstellelement 38, z. B. Bimetall oder Memory-Element, in Zwischenraum zwischen dem Planetenträger 8 und einem tellerförmigen Verbindungselement 80 angeordnet sein, welches das Hohlrad 4 auf der Eingangswelle 6 hält. Das temperaturabhängig formveränderliche Einstellelement 38 ist an seinem einen Ende an dem Verbindungselement 80 befestigt, beispielsweise angenietet, und preßt mit seinem anderen Ende eine Kupplungslamelle 82 gegen das Verbindungselement 80, je über Kupplungsbeläge 42 bzw. 44. Die Kupplungslamelle 82 kann auf einem Träger 84 axial verschiebbar sein, welcher an dem Planetenträger 8 befestigt, beispielsweise angeschweißt ist.

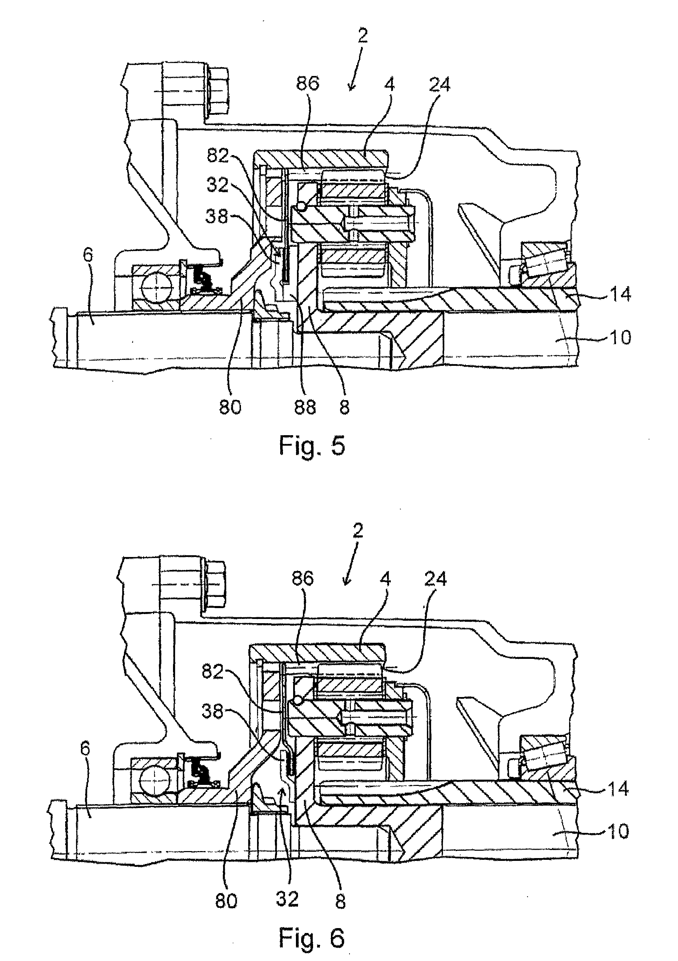

Fig. 5 zeigt eine Ausführungsform, bei welcher eine Kupplungslamelle 82 in die Innenverzahnung 86 des Hohlrades 4 eingesetzt ist und zwischen dem Planetenträger 8 und dem tellerförmigen Verbindungselement 80 von dem temperaturabhängig formveränderlichen Einstellelement 38 federelastisch gegen eine Kupplungsscheibe 88 gedrückt wird, die ebenso wie das Einstellelement 38 an dem Planetenträger 8 befestigt ist.

Fig. 6 ist gleich wie Fig. 5, es fehlt lediglich die Kupplungsscheibe 88. Dadurch wird die Kupplungslamelle 82 von dem temperaturabhängig formveränderlichen Einstellelement 38, welches am Planetenträger 8 befestigt ist, gegen eine Kupplungs-Reibfläche dieses Planetenträgers 8 gedrückt.

Bei allen vorstehend und nachstehend beschriebenen Ausführungsformen können die Reibflächen durch die betreffenden Elemente selbst oder durch darauf aufgebrachte Reibbeläge gebildet sein.

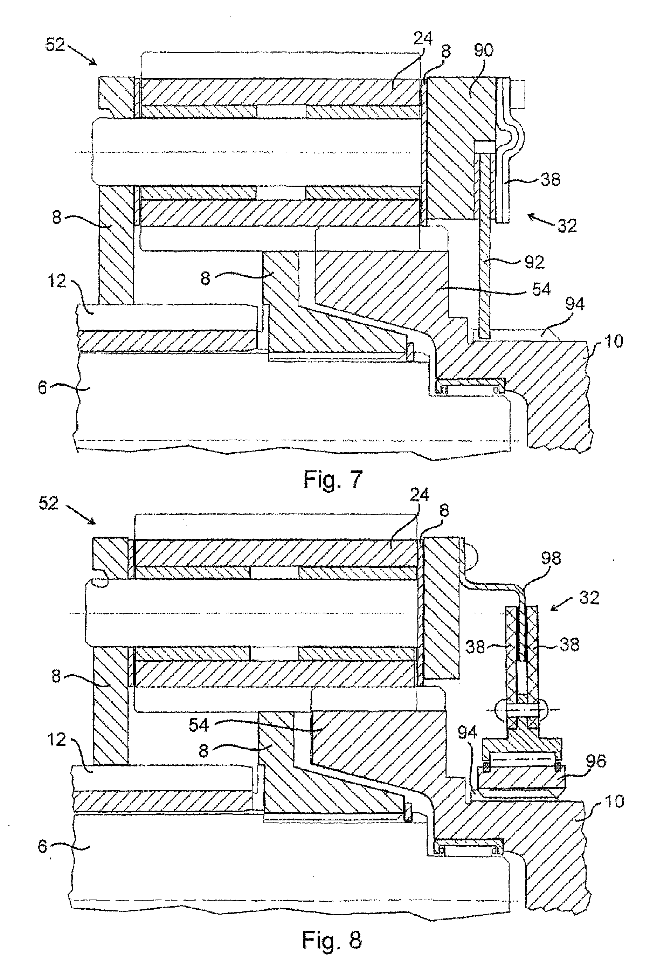

Fig. 7 zeigt einen Teil des Differentialgetriebes 52 von Fig. 2 und deren Reibkupplung 32 mit dem Einstellelement 38. Das temperaturabhängig formveränderliche Einstellelement 38 ist am Planetenträger 8 über eine Kupplungsscheibe 90 befestigt und klemmt dazwischen eine Reibscheibe oder Kupplungslamelle 92 ein, welche auf eine Außenverzahnung 94 der einen Ausgangswelle 10 aufgesteckt ist.

Bei der Ausführungsform von Fig. 8 sind auf eine Kupplungsverzahnung 94 der einen Ausgangswelle 10 über einen Träger 96 zwei temperaturabhängig formveränderliche Einstellelemente 38, vorzugsweise Bimetallfederscheiben, axial aufgesteckt, welche zwischen sich eine Reibscheibe 98 einklemmen, die am Planetenträger 8 befestigt ist.

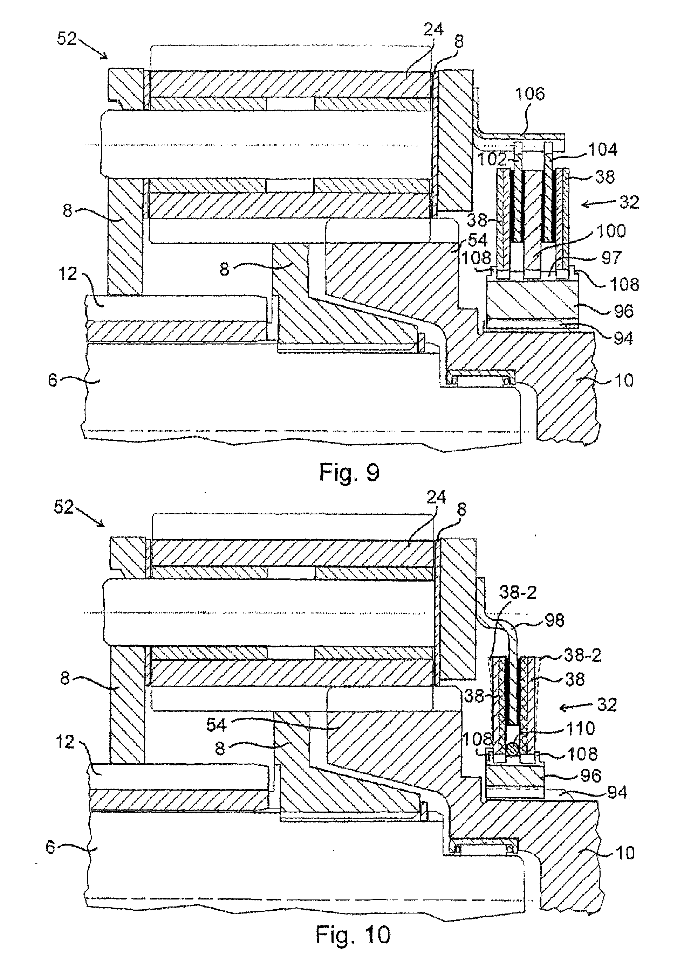

Fig. 9 zeigt den gleichen Ausschnitt des Differentialgetriebes von Fig. 2 mit einer weiteren Ausführungsform der Reibkupplung 32 und temperaturabhängigem Einstellelement 38. Ein Träger 96 ist auf eine Kupplungsverzahnung 94 der einen Ausgangswelle 10 axial aufgesteckt und trägt über eine weitere Kupplungsverzahnung 97, die an seinem Außenumfang gebildet ist, zwei temperaturabhängig formveränderliche Einstellelemente 38 und zwischen diesen eine Stahllamelle 100. Zwischen die Stahllamelle 100 und die beiden benachbarten temperaturabhängig formveränderlichen Einstellelemente 38 erstreckt sich je eine Reibscheibe 102 bzw. 104, welche von den Einstellelementen 38 temperaturabhängig mehr oder weniger stark gegen die Stahllamelle 100 eingeklemmt werden und an ihrem radial äußeren Umfang von einem äußeren Träger 106 gehalten werden, der am Planetenträger 8 befestigt ist. Die beiden temperaturabhängig formveränderlichen Einstellelemente 38 sind durch axial außerhalb von ihnen vorgesehene Materialvorsprünge 108, welche aus dem Material des inneren Trägers 96 verstemmt wurden, axial gegen die Reibscheiben 102 und 104 und gegen die dazwischen angeordnete Stahllamelle 100 vorgespannt.

Fig. 10 zeigt eine am Planetenträger 8 des Differentialgetriebes 52 befestigte Reibscheibe 98, welche axial zwischen zwei temperaturabhängig formveränderliche Einstellelemente 38, z. B. Bimetallscheiben, axial eingespannt ist. Die beiden Bimetallscheiben 38 sind auf dem Außenumfang eines inneren Trägers 96 durch Materialvorsprünge 108 gegen einen Distanzring 110 und gegen die Reibscheibe 98 axial vorgespannt. Die Vorsprünge 108 bestehen aus Material, welches von dem Träger 96 radial nach außen verstemmt wurde. Der Träger 96 ist auf eine Kupplungsverzahnung 94 der einen Ausgangswelle 10 axial aufgesteckt und dadurch mit dieser drehfest verbunden. Fig. 10 zeigt die Einstellelemente bzw. Bimetallscheiben 38 in ausgezogenen Linien in einer Grundstellung, in welcher sie bei einer relativ niedrigen Temperatur von beispielsweise 80°C mit stärkerer Anspresskraft an der Reibscheibe 98 axial anliegen als bei einer höheren Temperatur. Ferner zeigt Fig. 10 in gestrichelten Linien 38-2 die Bimetallscheiben 38 in einer von der Reibscheibe 98 durch eine vorbestimmte Temperatur von beispielsweise mehr als 200°C axial vollständig weggebogenen Stellung, bei welcher sie auf die Reibscheibe 98 kein wesentliches Reibmoment ausüben.

Bei allen vorstehend beschriebenen Ausführungsformen stellt das temperaturabhängige Einstellelement 38 selbst eine Kupplungsscheibe oder Kupplungslamelle dar. Sie kann selbst als Reibscheibe ausgebildet sein oder mit einem Reibbelag versehen sein. Bei anderen Ausführungsformen könnte das temperaturabhängig formveränderliche Einstellelement 38 zusätzlich vorhanden sein, ohne das es eine Kupplungsscheibe oder Kupplungslamelle bildet.

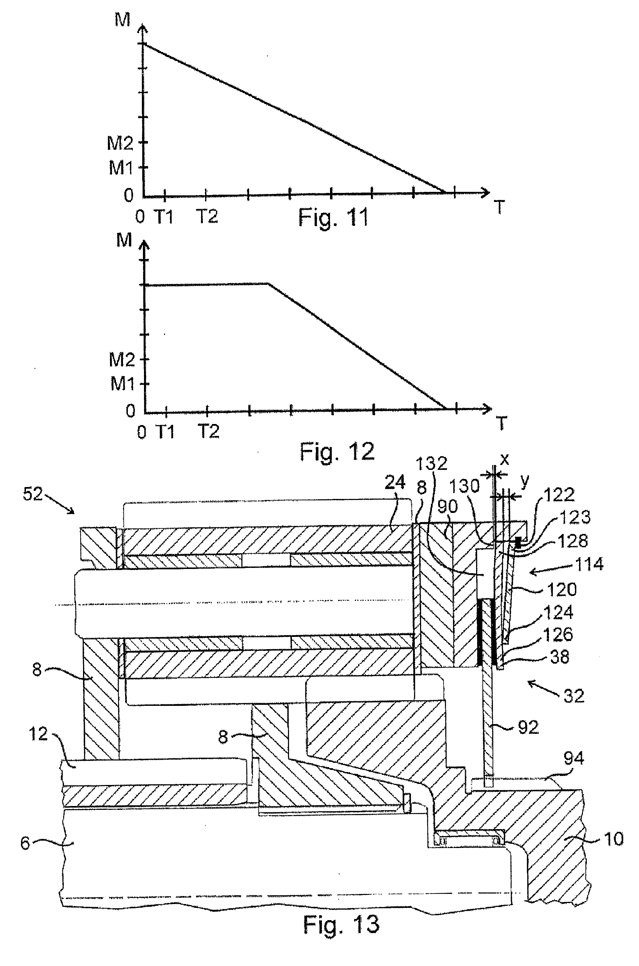

Bei allen vorstehend beschriebenen Ausführungsformen kann die Temperatur-zu-Drehmoment-Kennlinie und damit auch die Temperatur-zu-Kupplungsschließdruck-Kennlinie über den gesamten Temperaturbereich, der bei einem Kraftfahrzeug entstehen kann, abfallend ausgebildet sein, wie beispielsweise Fig. 11 zeigt. Umgekehrt bedeutet dies, dass mit zunehmend kälter werdender Temperatur der Kupplungsschließdruck ansteigt. Das übertragbare Drehmoment der Reibkupplung 32 bzw. 34 bzw. 36 sollte jedoch auch bei sehr tiefen Temperaturen, beispielsweise bei -40°C, noch so klein sein, dass die Kupplung beim Auftreten von betriebsüblichen Drehmomentstößen und Drehmomentunterschieden unverzüglich vom nichtrutschenden Schließzustand in den Reibrutschbetrieb zur Drehmomentdämpfung gehen kann. Auch bei sehr tiefen Temperaturen von beispielsweise -40°C sollte vermieden werden, dass die Reibkupplung das Differentialgetriebe blockiert,und dadurch ein längsgesperrtes Differentialgetriebe entsteht. Hierfür können gewünschtenfalls konstruktive Maßnahmen vorgesehen werden, welche das übertragbare Drehmoment der Reibkupplung auf einen Höchstwert begrenzen. Dies kann durch eine spezielle Form des temperaturabhängig größenveränderlichen und/oder formveränderlichen Einstellelements 38, d. h. des Bimetallelements oder Memory-Elements oder einer Kombination von solchen Elementen, oder durch eine Schnappvorrichtung, über welche die Bewegung des temperaturabhängigen Einstellelementes in eine andere Richtung umgelenkt wird, oder durch einen Leerlaufweg für das temperaturabhängige Einstellelement oder in ähnlicher Weise realisiert werden.

Fig. 13 zeigt eine Reibkupplung 32 mit einer temperaturabhängig selbsttätig wirkenden Einstellvorrichtung 114, welche entsprechend Fig. 12 in einem unteren Temperaturbereich einen parallelen Temperatur-zu-Kupplungsschließdruck-Kennlinienverlauf und in einem sich daran anschließenden oberen Temperaturbereich einen mit zunehmender Temperatur abfallende Temperatur-zu-Kupplungsschließdruck-Kennlinienverlauf aufweist. Der Kupplungsschließdruck bestimmt das von der Reibkupplung übertragbare Drehmoment. Diese Ausführungsform der Reibkupplung und temperaturabhängigen Einstellvorrichtung wird mit Bezug auf Fig. 13 anhand des Differentialgetriebes 52 von Fig. 2 beschrieben, ist jedoch auch für alle anderen Ausführungsformen von Differentialgetrieben verwendbar.

In Fig. 13 wird eine Reibscheibe 92 oder Kupplungslamelle, welche auf eine Kupplungsverzahnung 94 der einen Ausgangswelle 10 axial aufgesteckt ist, von einer Feder 120, z.B. einer Tellerfeder, mit einer vorbestimmten Kraft gegen eine Kupplungsscheibe 90 gedrückt, welche am Planetenträger 8 befestigt ist. Die Feder 120 drückt mit einer im Wesentlichen temperaturunabhängig konstanten oder nur wenig veränderlichen Kraft die Reibscheibe 92 gegen die Kupplungsscheibe 90 und erzeugt dadurch einen unabhängig von der Temperatur im Wesentlichen gleich bleibenden Kupplungs-Schließdruck, d.h. maximal übertragbares Kupplungs-Drehmoment, entsprechend der horizontalen Diagrammlinie in Fig. 12. Das radial äußere Federende 123 ist am Kupplungselement 90 durch einen Anschlag 122, beispielsweise durch einen Federring 122, in der einen axialen Richtung abgestützt (nach rechts), so dass das radial innere Federende 124 in entgegengesetzter axialer Richtung (nach links) die Kupplungsreibflächen der Reibkupplung 32 aneinander andrückt.

Zwischen dem radial inneren Federende 124 und der Reibscheibe 92 ist der radial innere Abschnitt 126 eines temperaturabhängig formveränderlichen, insbesondere biegbaren, Einstellelementes 38 angeordnet, z. B. eine Bimetall-Ringscheibe. Das radial äußere Ende 128 des temperaturabhängig verformbaren Einstellelements 38 ist mit axialem Spielraum "x plus y" zwischen einem axial äußeren (rechten) Anschlag, z.B. gebildet durch das radial äußere Federende 122, und einem axial inneren (linken) Anschlag 130 einer zentrischen Vertiefung 132 der Kupplungsscheibe 90 angeordnet.

Der axiale Spielraum "x plus y" ist für das radial äußere Ende 128 des Einstellelements 38 ein Leerlaufweg, auf welchem sich das radial äußere Ende 128 axial nicht abstützen kann, so dass auch der radial innere Abschnitt 126 dieses Einstellelements 38 keine axiale Kraft in der einen oder anderen axialen Richtung erzeugen kann, so dass es auch nicht den Schließdruck der Reibkupplung 32 beeinflußt. Der Schließdruck der Reibkupplung wird nur von der Feder 120 erzeugt und ist dadurch im Wesentlichen unabhängig von der Kupplungstemperatur konstant entsprechend dem horizontal zur Temperaturachse verlaufenden Kurvenabschnitt in Fig. 12. Damit wird verhindert, dass der Kupplungsschließdruck unterhalb einer vorbestimmten Temperatur von z. B. 80°C so groß wird, dass die Reibkupplung bei den im normalen Fahrbetrieb auftretenden Drehmomenten nicht mehr in Rutschbetrieb gehen kann. Mit zunehmender Kupplungstemperatur biegt sich das radial äußere Ende 128 des Einstellelements 38 mit Bezug auf Fig. 13 von rechts nach links, bei einer Temperaturreduzierung in entgegengesetzter Richtung von links nach rechts. Wenn die Kupplungstemperatur über den vorbestimmten Wert von beispielsweise 80°C hinaus ansteigt, biegt sich das radial äußere Ende des Einstellelements 38 so weit,dass es an dem nach außen (nach rechts) zeigenden inneren Anschlag 130 der Kupplungsscheibe 90 anliegt. Dies ist in Fig. 12 der Temperaturpunkt, wo sich die horizontale Diagrammlinie mit der schrägen Diagrammlinie kreuzt. Wenn die Temperatur weiter ansteigt, dann stützt sich das radial äußere Ende 128 des Einstellelements 38 an dem nach außen zeigenden inneren Anschlag 130 ab und das Einstellelement 38 drückt an seinem radial inneren Endabschnitt 126 mit zunehmender Temperatur stärker gegen das radial innere Federende 124 der Feder 120 in axialer Richtung nach außen weg von der Reibscheibe 92. Damit wird der von der Feder 120 erzeugte Kupplungsschließdruck ab dem vorbestimmten Temperaturwert von z. B. 80°C mit ansteigender Kupplungstemperatur zunehmend von dem temperaturabhängig verformbaren Einstellelement 38 reduziert, entsprechend dem im Fig. 12 nach rechts abfallenden Kurvenabschnitt.

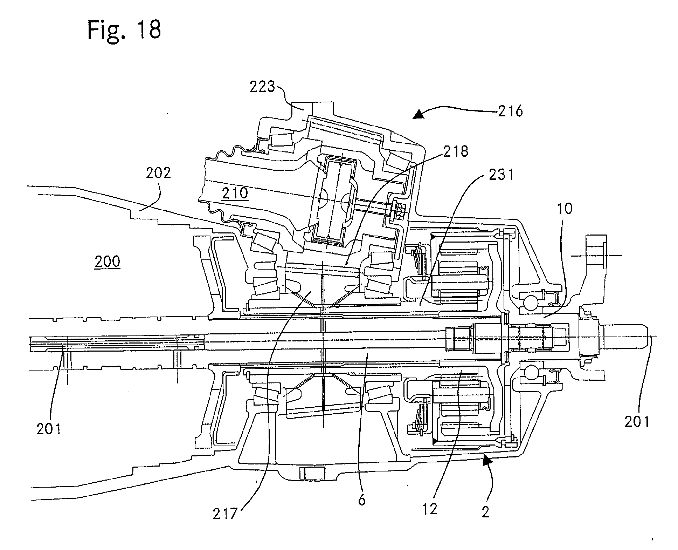

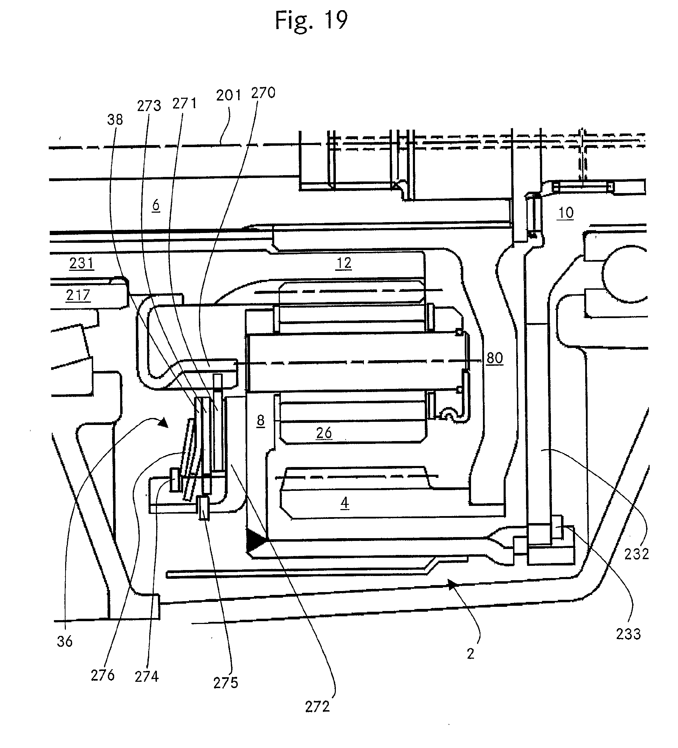

Fig. 18 zeigt in einem Teilbereich einen längs eingebauten Antriebsstrang für ein Kraftfahrzeug, der u.a. ein Automatikgetriebe 200 mit einer im eingebauten Zustand zum Heck des Kraftfahrzeugs weisenden Getriebeausgangswelle aufweist. Diese Getriebeausgangswelle bildet die Eingangswelle 6 des Differentialgetriebes 2, welches in Fig. 19 näher erläutert ist.

Das Automatikgetriebe 200 besitzt ein Getriebegehäuse 202 mit einem angeformten Lagergehäuse 223 für einen Seitenabtrieb 216, so dass das Automatikgetriebe 200 kostengünstig nach einem sogenannten "add-on-Prinzip" für eine Allradvariante nutzbar ist.

Bei einer derartigen Variante ist die gegenüber der reinen Heckantriebsvariante verlängerte Getriebeausgangswelle bzw. Eingangswelle 6 über das Differentialgetriebe 2 und eine Heckantriebsgelenkwelle mit einer Ritzelwelle eines nicht näher dargestellten Hinterachsgetriebes derart verbunden, dass ein erster Teil des Antriebsmomentes auf das Hinterachsgetriebe übertragen wird. Ein zweiter Teil des Antriebsmomentes wird von der Eingangswelle 6 über
- das Differentialgetriebe 2,
- ein Antriebsritzel 217,
- ein Abtriebsritzel 218,
- eine Gelenkwelle 210 des Seitenabtriebs 216 und
- eine Kegelritzelwelle eines nicht näher dargestellten Vorderachsgetriebes
auf eine Vorderachse übertragen. Mittels des Differentialgetriebes 2 sind Abtriebsmomente auf das Vorderachsgetriebe und das Hinterachsgetriebe verteilbar sowie Drehzahldifferenzen ausgleichbar. Die Gelenkwelle 210 des Seitenabtriebs 216 ist horizontal um einen Winkel von ca. 8° zur Antriebsstranglängsachse 201 verschwenkt. Die Gelenkwelle 210 des Seitenabtriebs 216 ist vertikal um einen Winkel von ca. 4° zur Antriebsstranglängsachse 201 verschwenkt.

Der Seitenabtrieb 216 wird von zwei Zahnrädern gebildet, und zwar von dem Antriebsritzel 217, und das mit diesem kämmende Abtriebsritzel 218. Das Antriebsritzel 217 ist drehfest mit einer Hohlwelle 231 verbunden, welche einteilig mit einem Sonnenrad 12 des Differentialgetriebes 2 ausgeführt ist. Innerhalb dieser Hohlwelle 231 verläuft die Eingangswelle 6. Das Abtriebsritzel 218 ist mittels einer angestellten Kegelrollenlagerung in x-Anordnung in dem Lagergehäuse 223 gelagert.

Zur Herstellung des horizontalen Winkels und des nicht näher dargestellten vertikalen Winkels ist die Gelenkwelle 210 mittels eines Kreuzgelenkes gelenkig radial innerhalb des Abtriebsritzels 218 angeordnet. Ferner ist die Gelenkwelle 210 in Fahrtrichtung vorn - d.h. an deren anderem Ende - mit einem weiteren Kreuzgelenk gelenkig an die nicht näher dargestellte Kegelritzelwelle des Vorderachsgetriebes gekoppelt.

Bei dem Antriebsstrang gemäß Fig. 18 sind das Antriebsritzel 217 und das mit diesem kämmende Abtriebsritzel 218 jeweils als kegeliges Stirnrad ausgeführt. Die Gelenkwelle 210 ist auf der in Fahrtrichtung rechts liegenden Seite des nicht näher dargestellten Antriebsmotors angeordnet.

Fig. 19 zeigt in einem Halbschnitt ein Detail des Differentialgetriebes 2 aus Fig. 18. Dabei ist lediglich das Sonnenrad 12 mit dem Planetenträger 8 mittels einer Reibkupplung 36 mit einem temperaturabhängigen Einstellelement 38 gekuppelt.

Die Eingangswelle 6 ist mittels einer Keilwellenverzahnung drehfest mit dem Verbindungselement 80 verbunden, welches an dessen radial äußerem Umfang bewegungsfest mit dem Hohlrad 4 verbunden ist. Dabei bilden das Verbindungselement 80 und das Hohlrad 4 einen Topf, dessen Öffnung dem in Fig. 18 ersichtlichem Automatikgetriebe 200 zugewandt ist. Dieser Topf wird von dem ebenfalls topfförmig ausgestalteten Planetenträger 8 einmal vollständig umgriffen, so dass ersichtliche Planetenräder 26 und nicht ersichtliche Planetenräder in den Topf des Verbindungselementes 80 hineinragen, wohingegen der Boden 232 des topfförmig ausgestalteten Planetenträgers 8 bewegungsfest mit der Getriebeabtriebswelle 10 verbunden ist. Um diese kompakte Bauform montierbar zu gestalten, ist der Boden 232 mittels einer drehfesten - aber zur Montage/Demontage lösbaren - Welle-Nabe-Verzahnung verbunden. Zur Axialsicherung der und für sich genommen axialverschieblichen Welle-Nabe-Verzahnung ist in deren Bereich ein Axialsicherungsring 233 eingesetzt.

In dem axialen Bereich zwischen dem Planetenträger 8 und dem Antriebsritzel 217 ist die Reibkupplung 36 mit dem temperaturabhängigen Einstellelement 38 angeordnet.

Die Reibkupplung umfasst neben dem zuvorgenanntem Einstellelement 38:
a.) einen radial inneren Trägerring 270,
   a.a.) welcher an dessen Innenseite mit der Hohlwelle 231 verpresst ist und
   a.b.) welcher an dessen Außenumfang eine sich axial erstreckende Außenverzahnung aufweist,
      a.b.a.) in welche eine erste axialverschiebliche Reibungslamelle 271 eingreift
b.) einen radial äußeren Trägertopfring 272,
   b.a.) dessen Topfboden mit dem Planetenträger 8 verschweißt ist und
   b.c.) dessen Wandung innen eine sich axial erstreckende Innenverzahnung aufweist,
      b.c.a.) in welche eine zweite axialverschiebliche Reibungslamelle 273 und das als Lamelle ausgeführte temperaturabhängige Einstellelement 38 eingreift und ein erster axialfester Axialsicherungsring 274 eingesetzt ist,
   b.d.) in dessen Wandung außen ein zweiter axialfester Axialsicherungsring 275 eingesetzt ist,
c.) eine Tellerfeder 276 welche sich am ersten Axialsicherungsring 274 abstützt und nacheinander folgend
   - das Einstellelement 38,
   - die zweite Reibungslamelle 273 und
   - die erste Reibungslamelle 271
gegen den Topfboden des äußeren Trägertopfringes 272 verspannt.

Dabei ist das temperaturabhängige Einstellelement 38 mit Spiel zwischen den beiden Axialsicherungsringen 274 und 275 aufgenommen, so dass das Einstellelement 38 bei Temperaturerhöhung über einen Grenzwert zum Anliegen am radial äußeren Axialsicherungsring 275 kommt und somit das übertragbare Drehmoment zwischen Planetenträger 8 und Hohlwelle 231 verringert.

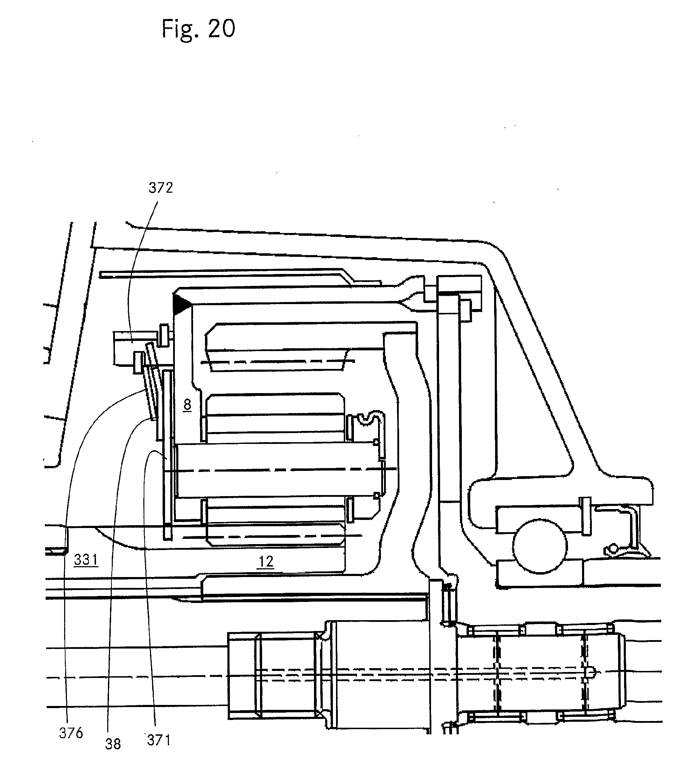

Fig. 20 zeigt in einem Halbschnitt ein weitergehend hinsichtlich des axialen Raumbedarfes optimiertes zweites Ausgestaltungsbeispiel des Differentialgetriebes 2, welches Anwendung in einem Antriebsstrang gemäß Fig. 18 finden kann.

Im folgenden werden nur die Unterschiede zum vorhergehenden Ausgestaltungsbeispiel genannt.

Anstelle des äußeren Trägertopfringes ist radial außen ein Ring 372 mit dem Planetenträger 8 bewegungsfest verbunden, so dass eine axialverscheiblich gegenüber der Hohlwelle 331 angeordnete Reibungslammelle 371 unmittelbar am Planetenträger 8 anliegt. Diese Reibungslamelle 371 ist radial innen unmittelbar drehfest in der Verzahnung des Sonnenrades 12 aufgenommen. Somit sind zwischen einer Tellerfeder 376 und dem Planetenträger 8 ausschließlich die Reibungslammelle 371 und das temperaturabhängigen Einstellelement 38 verspannt.

Bei allen Ausführungsformen kann die Temperatur-zu-Kupplungsschließdruck-Kennlinie gerade oder gekrümmt verlaufen.

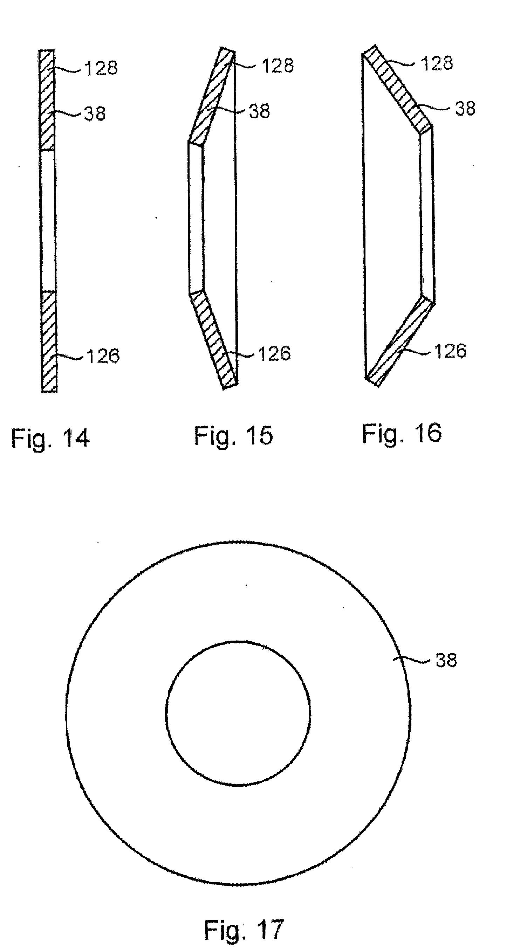

Die Figuren 14, 15 und 16 zeigen Axialschnitte und die Fig. 17 eine Stirnansicht des temperaturabhängig tellerfederförmig verformbaren, ringscheibenförmigen Einstellelements 38. In Fig. 14 ist das Einstellelement 38 beispielsweise bei 100°C flach. Fig. 15 zeigt es bei sehr tiefen Minus-Temperaturen von beispielsweise -40°C am Außenumfangsrand 128 tellerförmig nach rechts abgebogen. Fig. 16 zeigt es bei hohen Plus-Temperaturen von beispielsweise +150°C am äußeren Rand 128 nach links abgebogen.

Bei den Fig. 1 bis 10 drückt das temperaturabhängig sich formverändernde Einstellelement 38 die Kupplung 32 bzw. 34 bzw. 36 in Schließrichtung. In Fig. 13 wird die Kupplung von der Feder 120, deren Federkraft im Wesentlichen temperaturunabhängig oder nur wenig temperaturabhänig ist, in Schließrichtung und von dem temperaturabhängig sich verformenden Einstellelement 38 in Öffnungsrichtung gedrängt. Gemäß einer anderen Ausführungsform von Fig. 13 kann das temperaturabhänigige Einstellelement 38 ohne axialen Spielraum angeordnet sein, erforderlichenfalls auch in Kupplungsöffnungsrichtung vorgespannt sein. Die Feder 120 hat vorzugsweise die Form einer Tellerfeder, kann jedoch auch jede andere zweckmäßige Form haben, beispielsweise anstelle eines Ringelementes auch aus einer Vielzahl von Segmenten bestehen. Dasselbe gilt für das temperaturabhängige Einstellelement 38. Alle genannten Varianten sind bei allen Arten von Differentialgetrieben anwendbar, wie sie beispielsweise in den Figuren 1, 2 und 3 gezeigt sind.

Die Reibkupplung 32 der Erfindung ist bei allen Ausführungen so ausgebildet, dass sie im Normalzustand rutschfrei geschlossen ist, jedoch nicht als Sperrelement zum Sperren des Differentialgetriebes wirkt, z. B. keine Längssperre eines Vierradantriebes bildet, sondern nur als Drehmoment-Dämpfungselement wirkt. Das maximal übertragbare Drehmoment der Kupplung ist so klein, dass die Kupplung bei Drehmomentstößen, wie sie beim normalen Fahrbetrieb eines Kraftfahrzeuges auftreten, zu Rutschen beginnt und dadurch die Drehmomentstöße dämpft. Damit rutscht die Kupplung auch dann, wenn das Drehmoment ohne Stoß den Wert des maximal übertragbaren Drehmoments übersteigt. Ferner ist die Reibkupplung 32 gemäß der Erfindung mit mindestens einem temperaturabhängig formoder größenmäßig veränderbaren Element 38 versehen, welches mindestens in einem vorbestimmten Temperaturbereich der Reibkupplung deren maximal übertragbares Drehmoment mit zunehmender Kupplungstemperatur reduziert und mit abnehmender Kupplungstemperatur erhöht. Gemäß bevorzugter Ausführungsform wird damit die Reibkupplung vollständig geöffnet, wenn die Kupplungstemperatur einen vorbestimmten Maximalwert nach oben überschreitet. Gemäß weiterer bevorzugter Ausführungsform ist das maximale Drehmoment limitiert. Je größer das von einem Fahrantriebsmotor auf den Antriebsstrang übertragbare Drehmoment ist, desto größer kann das maximale Drehmoment der Reibkupplung sein. Das maximal übertragbare Drehmoment der Reibkupplung kann beispielsweise 30% des vom Fahrantriebsmotor auf den Antriebsstrang übertragbaren Drehmoments sein. In der Regel sind weniger ausreichend, beispielsweise 20%. Ein realistischer Wert ist ungefähr 50Nm. In der Regel werden jedoch weniger ausreichend sein, beispielsweise nur 20Nm. Wenn die Reibkupplung öffnet, beträgt das Drehmoment Null.

## Patentansprüche

1. Kraftfahrzeug-Antriebsstrang, welcher ein Differentialgetriebe (2;52;62) enthält, welches einen Eingangs-Differentialsteil (6,4;6,8;66,68,74,76) und zwei Ausgangs-Differentialteile (8,10 und 12,14;54,10 und 12,14; 10,72 und 14,70) aufweist,
**dadurch gekennzeichnet,**
**dass** zwei von den drei Differentialteilen durch eine Drehmomentdämpfungs-Reibkupplung (32;34;36) miteinander gekuppelt sind, deren schlupffrei übertragbares Kupplungsdrehmoment so klein ist, dass sie bei Drehmomentstößen und bei Drehmomentdifferenzen, wie sie bei üblichem Kraftfahrzeugbetrieb normalerweise zwischen den beiden Differentialteilen auftreten, automatisch in Reibungs-Schlupfbetrieb geht, und dass die Reibkupplung mit einem temperaturabhängigen Einstellmittel (38;38,120) versehen ist, welches mindestens in einem vorbestimmten Temperaturbereich den Kupplungsschließdruck und damit das übertragbare Kupplungsdrehmoment abhängig von der Kupplungstemperatur mit steigender Kupplungstemperatur verkleinert und mit abnehmender Kupplungstemperatur erhöht.

2. Kraftfahrzeug-Antriebsstrang nach Anspruch 1,
**dadurch gekennzeichnet,**
**dass** das Differentialgetriebe (2;52;62) ein Verteilergetriebe ist, von welchem ein Ausgangs-Differentialteil (8,10;54,10;10,72) mit einem Achsantriebsstrang (10) einer Fahrzeugachse und der andere Ausgangs-Differentialteil (12,14;12,14;70,14) mit einem Achsantriebsstrang (22;14) einer anderen Fahrzeugachse eines Kraftfahrzeuges antriebsmäßig verbunden oder verbindbar ist.

3. Kraftfahrzeug-Antriebsstrang nach Anspruch 1,
**dadurch gekennzeichnet,**
**dass** das Differentialgetriebe (62) ein Ausgleichsgetriebe einer Kraftfahrzeugachse ist.

4. Kraftfahrzeug-Antriebsstrang nach einem der vorhergehenden Ansprüche,
**dadurch gekennzeichnet,**
**dass** das temperaturabhängige Einstellmittel (38;38,120) mindestens ein von der Kupplungstemperatur temperaturabhängig größenveränderliches und/oder formveränderliches Einstellelement (38) aufweist.

5. Kraftfahrzeug-Antriebsstrang nach Anspruch 4,
**dadurch gekennzeichnet,**
**dass** das Einstellelement (38) in Kupplungsbetätigungsrichtung federelastisch ist.

6. Kraftfahrzeug-Antriebsstrang nach Anspruch 4 oder 5,
**dadurch gekennzeichnet,**
**dass** die Reibkupplung (32;34;36) von dem Einstellelement (38) in Schließrichtung vorgespannt ist und dadurch bei üblichen Betriebstemperaturen rutschfrei oder rutschend geschlossen gehalten wird.

7. Kraftfahrzeug-Antriebsstrang nach mindestens einem der Ansprüche 4 bis 6,
**dadurch gekennzeichnet,**
**dass** mindestens ein Federelement (120) vorgesehen ist, welches dem Kupplungs-Schließdruck des Einstellelements (38) entgegenwirkend angeordnet ist.

8. Kraftfahrzeug-Antriebsstrang nach mindestens einem der Ansprüche 4 oder 5,
**dadurch gekennzeichnet,**
**dass** mindestens ein Federelement (120) vorgesehen ist, welches die Reibkupplung (32;34;36) mit einer vorbestimmten Federkraft in Schließrichtung vorspannt und dadurch bei üblichen Betriebstemperaturen für den Dämpfungs-Reibungsschlupfbetrieb geschlossen hält, und dass das mindestens eine Einstellelement (38) dem Kupplungsschließdruck des Federelementes (120) mit zunehmender Temperatur stärker entgegenwirkend angeordnet ist.

9. Kraftfahrzeug-Antriebsstrang nach einem der vorhergehenden Ansprüche,
**dadurch gekennzeichnet,**
**dass** das temperaturabhängige Einstellmittel (38;38,120) ausgebildet ist, um die Reibungskupplung (32;34;36), wenn deren Kupplungstemperatur einen vorbestimmten Temperaturwert nach oben übersteigt, zu öffnen.

10. Kraftfahrzeug-Antriebsstrang nach mindestens einem der vorhergehenden Ansprüche,
**dadurch gekennzeichnet,**
**dass** der Schließdruck der Reibkupplung (32;34;36), und damit auch ihr maximales schlupffrei übertragbares Drehmoment, nach oben limitiert ist, sodass dieses Limit nicht überschreitbar ist, unabhängig davon, wie tief die Kupplungstemperatur absinkt.

11. Kraftfahrzeug-Antriebsstrang nach mindestens einem der vorhergehenden Ansprüche,
**dadurch gekennzeichnet,**
**dass** das temperaturabhängige Einstellmittel (38;38,120) in einem unteren Temperaturbereich der Reibkupplung (32;34;36) einen zur Temperaturachse eines Temperatur-Kupplungsschließdruck-Diagrammes parallelen Temperatur-zu-Kupplungsschließdruck-Kennlinienabschnitt und in einem sich daran anschließenden oberen Temperaturbereich einen mit zunehmender Temperatur abfallenden Temperatur-zu-Kupplungsschließdruck-Kennlinienabschnitt aufweist, auf welchem der Kupplungsschließdruck mit zunehmender Kupplungstemperatur fortlaufend abnimmt.

12. Kraftfahrzeug-Antriebsstrang nach Anspruch 11,
**dadurch gekennzeichnet,**
**dass** das temperaturabhängige Einstellmittel (38;38,120) unterhalb einer vorbestimmten Temperatur einen Leerlaufweg (x,y) aufweist, auf welchem es einen Leerlauf hat und dadurch unterhalb einer vorbestimmten Temperatur keine temperaturabhängigen Schließdruckänderungen der Reibungskupplung bewirkt, so dass unterhalb der vorbestimmten Temperatur der Schließdruck der Reibungskupplung temperaturunabhängig konstant bleibt.

13. Kraftfahrzeug-Antriebsstrang nach Anspruch 12 in Kombination mit einem der Ansprüche 8 bis 11,
**dadurch gekennzeichnet,**
**dass** das Federelement (120) zwischen die Reibkupplung (32) und einen Getriebeteil (90) eingespannt und dazwischen federelastisch ist, welcher unabhängig von Kupplungsbetätigungsbewegungen in Kupplungsbetätigungsrichtung ortsfest ist, und dass das temperaturabhängig veränderliche Einstellelement (38) einen zwischen das Federelement (120) und die Reibkupplung (32) eingespannten Endabschnitt (126) und einen davon entfernten Endabschnitt (128) hat, welcher zwischen zwei in Kupplungsbetätigungsrichtung mit Abstand voneinander vorgesehenen Anschlägen (120,130) innerhalb eines definierten Leerlauf-Spielraumes in Kupplungsbetätigungsrichtung frei beweglich ist, ohne in Kupplungsbetätigungsrichtung ein wesentliches Stützmoment für den einen Endabschnitt (126) zu erzeugen, und daß das temperaturabhängige Einstellelement (38) mindestens zwischen seinen beiden Endabschnitten (126,128) in Kupplungsbetätigungsrichtung thermisch verformbar ist.

14. Kraftfahrzeug-Antriebsstrang nach mindestens einem der Ansprüche 1 bis 9,
**dadurch gekennzeichnet,**
**dass** das temperaturabhängige Einstellmittel (38;38,120) für alle Temperaturen eines Kraftfahrzeuges im Kaltzustand und im Warmzustand eine durchgehend abfallende Temperatur-zu-Kupplungsschließdruck-Kennlinie aufweist, gemäß welcher der Kupplungsschließdruck mit zunehmender Kupplungstemperatur fortlaufend abnimmt.

15. Kraftfahrzeug-Antriebsstrang nach mindestens einem der Ansprüche 4 bis 14,
**dadurch gekennzeichnet,**
**dass** das mindestens eine temperaturabhängige Einstellelement (38) mit einem Kupplungsreibbelag (42) der Reibkupplung (32;34;36) versehen ist und damit einen Teil der Reibkupplung bildet.

16. Kraftfahrzeug-Antriebsstrang nach mindestens einem der Ansprüche 4 bis 15,
**dadurch gekennzeichnet,**
**dass** das temperaturabhängige Einstellelement (38) auf eine Verzahnung (94) einer Zahnkupplung axial aufgesteckt ist, die an einem der Differentialteile gebildet ist.

17. Kraftfahrzeug-Antriebsstrang nach mindestens einem der Ansprüche 4 bis 15,
**dadurch gekennzeichnet,**
**dass** das temperaturabhängige Einstellelement (38) an einem der beiden gekuppelten Differentialteile befestigt ist.

18. Kraftfahrzeug-Antriebsstrang nach mindestens einem der Ansprüche 4 bis 17,
**dadurch gekennzeichnet,**
**dass** das mindestens eine temperaturabhängige Einstellelement (38) ein Bimetallelement ist.

19. Kraftfahrzeug-Antriebsstrang nach mindestens einem der Ansprüche 4 bis 17,
**dadurch gekennzeichnet,**
**dass** das mindestens eine temperaturabhängige Einstellelement (38) ein Memory-Element (Formgedächtnis-Element) ist.

20. Kraftfahrzeug-Antriebsstrang nach mindestens einem der vorhergehenden Ansprüche,
**dadurch gekennzeichnet,**
**dass** das temperaturabhängige Einstellmittel (38;120) in das Differentialgetriebe (2;52;62) integriert ist.

21. Kraftfahrzeug-Antriebsstrang nach Anspruch 2,
**dadurch gekennzeichnet,**
- **dass** das eine Ausgangs-Differentialteil des Verteilergetriebes (Differentialgetriebe 2) ein mit einem Hinterachsgetriebe drehmomentübertragend verbundener Planetenträger (8) mit zumindest einem Paar Planetenrädern (26) ist und
- **dass** das andere Ausgangs-Differentialteil des Verteilergetriebes ein mit einem Vorderachsgetriebe verbundenes Sonnenrad (12) ist und
- **dass** Eingangs-Differentialteil eine bewegungsfest mit einem Sonnenrad (12) ausgestaltete Eingangswelle (6) ist, wobei
die beiden Ausgangs-Differentialteile
- topfförmig sind,
- ineinander eingreifen und
- mittels der Reibkupplung (36) reibschlüssig miteinander kuppelbar sind.
